# EUROPÄISCHE PATENTANMELDUNG

(11) **EP 2 100 802 A1**
(43) Veröffentlichungstag der Anmeldung: **16.09.2009**
(21) Anmeldenummer: 08004634.5
(22) Anmeldetag: 13.03.2008
(51) Int. Cl.: B62D 49/06, B62D 53/02, A01B 51/02

(54) **Wechselsystem für ein Fahrzeug, insbesondere ein Landwirtschafts-, Bau- und/oder kommunal oder im Privatbereich nutzbares Fahrzeug**

(71) Anmelder: Tünnissen, Werner, 47506 Neukirchen-Vluyn (DE)
(72) Erfinder: Tünnissen, Werner, 47506 Neukirchen-Vluyn (DE)
(74) Vertreter: Schoenen, Norbert

(57) **Zusammenfassung**

Das Wechselsystem für ein Fahrzeug, insbesondere ein Landwirtschafts-, Bau- und/oder kommunal oder im Privatbereich nutzbares Fahrzeug, umfassend
- eine fahrbare Antriebseinheit (1), vorzugsweise mit Führerstand und Fahrersitz, insbesondere mit nur einer Fahrwerksachse öder ausgeführt als Einzelradantrieb mit 2 Rädern (hydraulisch, mechanisch oder elektrisch) und umfassend
- unterschiedliche wechselbare Arbeitsgeräte, die an die Antriebseinheit (1) ankuppelbar sind, wobei die Antriebseinheit und das/die Arbeitsgerät(e) nach dem Ankuppeln eine selbstfahrende Arbeitsmaschine bilden, ist dadurch gekennzeichnet, dass das/die Arbeitsgerät(e) (5,6,7,u.a.) über ein frei wählbares Lenkmittel (4) mit der Antriebseinheit (1) verbindbar sind.

## Beschreibung

Die Erfindung betrifft ein Wechselsystem für ein Fahrzeug, insbesondere ein Landwirtschafts-, Bau- und/oder kommunal oder im Privatbereich nutzbares Fahrzeug, umfassend eine fahrbare Antriebseinheit, vorzugsweise mit Führerstand und Fahrersitz, insbesondere mit nur einer Fahrwerksachse oder ausgeführt als Einzelradantrieb mit 2 Rädern (hydraulisch, mechanisch oder elektrisch), und umfassend unterschiedliche wechselbare Arbeitsgeräte, die an die Antriebseinheit, an Front und/oder Heck, ankuppelbar sind, wobei die Antriebseinheit und das/die Arbeitsgerät(e) nach dem Ankuppeln eine selbstfahrende Arbeitsmaschine bilden.

Ein derartiges Wechselsystem ist aus der DE 29 19 641 A1 (Schliesing, Hans), veröffentlicht 1980, bekannt. Hiermit wird das Problem gelöst, die mit relativ hohen Herstellungskosten belastete Antriebseinheit, den Triebkopf, möglichst unabhängig von einer Vielzahl der mit dieser betreibbaren Arbeitsgeräte einsetzen zu können. Das Problem tritt insbesondere beim Einsatz solcher Fahrzeuge im kommunalen Einsatz auf, bei dem für den Wintereinsatz vornehmlich Streu- und Räumgeräte verwendet werden und für den Sommereinsatz vorzugsweise Mäh- und Kehr- bzw. Mähsauggeräte. Ähnlich ist es beim Einsatz solcher Fahrzeuge in der Landwirtschaft beim Einsatz zu Pflanz- und/oder Pflegearbeiten oder Erntearbeiten.

Technisch wird das genannte Problem bei dem bekannten Fahrzeug dadurch gelöst, dass die Antriebseinheit starr oder über ein horizontales Schwenklager mit einem Längsträger biegesteif verbindbar ist. Der Längsträger dient als Halterung für eine starr bzw. über ein horizontales Schwenklager mit diesem verbundene Lenkachse. Das Antriebsaggregat ist beidendig mit einem der biegesteifen Verbindung des Längsträgers mit dem Antriebsaggregat dienenden mechanischen Kuppelglied versehen.

Weitere Einzelheiten dieses bekannten Fahrzeugs sind in der DE 29 19 641 A1 zu finden. Zur Vermeidung von Wiederholungen wird auf diese Schrift verwiesen.

Notwendig bei dem bekannten Fahrzeug ist jedenfalls ein biegesteifer Längsträger als Teil des anzukuppelnden Arbeitsgerätes. Arbeitsgeräte ohne einen solchen Längsträger sind mit der Antriebseinheit nicht zu verbinden oder anzukuppeln.

Da auf jeden Fall dieser Längsträger vorhanden sein muss, kann die Lenkung in diesem Stand der Technik nur über die lenkbaren Achsschenkel erfolgen. Andere Arten der Lenkung sind hier nicht möglich.

Der Erfindung liegt daher die Aufgabe zugrunde, bei dem Wechselsystem der eingangs genannten Art eine Möglichkeit zu schaffen, auch Arbeitsgeräte ohne einen solchen biegesteifen Längsträger und mit frei wählbaren und damit optimalen, zu dem jeweiligen Arbeitsgerät passenden Lenkmitteln sowohl in Front als auch am Heck zu verwenden. Die Beschränkung auf Arbeitsgeräte mit einem solchen Längsträger soll also entfallen.

Diese Aufgabe wird bei dem Wechselsystem der eingangs genannten Art dadurch gelöst, dass das/die Arbeitsgerät(e) über ein frei wählbares Lenkmittel mit der Antriebseinheit verbindbar sind.

Dazu wird weiterhin vorgeschlagen, dass die Arbeitsgeräte bezogen auf die vertikale Richtung biegesteif mit der Arbeitseinheit verbindbar sind, vorzugsweise über eine Schnellwechselplatte.

Vorzugsweise weist das ankoppelbare Arbeitsgerät einen biegesteifen Rahmen auf. Durch die Biegesteifigkeit der Verbindung von Arbeitsgerät mit Antriebseinheit sowie des Rahmens des Arbeitsgerätes kann erfindungsgemäß auf den aus dem Stand der Technik bekannten biegesteifen Längsträger des Arbeitsgerätes verzichtet werden, wodurch man frei ist in der Wahl des Lenkmittel, ohne dass die Stabilität der aus Arbeitsgerät und Antriebseinheit (Triebkopf) zusammengesetzten Arbeitsmaschine dadurch beeinträchtigt wird.

Weitere vorteilhafte Ausgestaltungen der Erfindung sind in den Unteransprüchen angeführt.

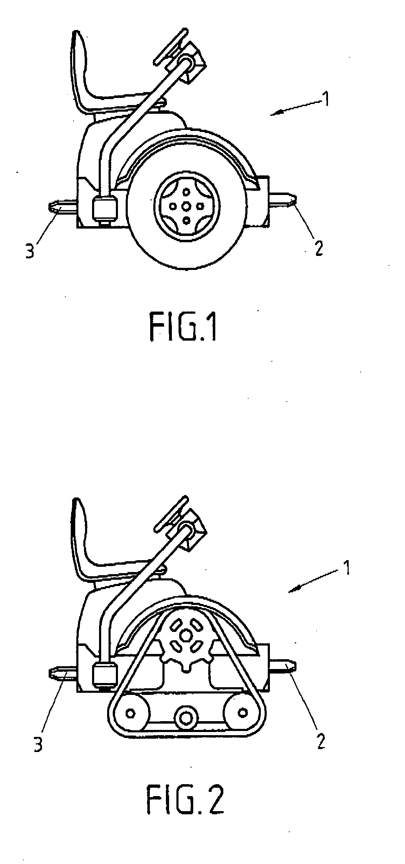

Im Folgenden werden nähere Einzelheiten der Erfindung sowie erfindungsgemäße Ausführungsbeispiele anhand von Zeichnungen näher erläutert. Es zeigen
- Figur 1: eine seitliche Ansicht einer Antriebseinheit (Triebkopf) mit Radantrieb,
- Figur 2: eine Antriebseinheit entsprechend Figur 1, aber mit Kettenantrieb,
- Figur 3 bis Figur 8: Arbeitsmaschinen, bestehend aus einer Antriebseinheit und einem an der Frontseite angekuppelten unterschiedlichem Arbeitsgerät, ebenfalls in Seitenansicht,
- Figur 9 bis Figur 11: eine Arbeitsmaschine, bestehend aus der Antriebseinheit und einem unterschiedlichen heckseitig angekuppelten Arbeitsgerät und
- Figur 12 bis Figur 20: eine Arbeitsmaschine bestehend aus einer Antriebseinheit und einem unterschiedlichen frontseitig angebrachten Arbeitsgerät sowie außerdem einem unterschiedlichen heckseitig angebrachten Arbeitsgerät.

In allen Zeichnungen haben gleiche Bezugszeichen die gleiche Bedeutung und werden daher gegebenenfalls nur einmal erläutert.

Die Antriebseinheit 1 hat einen Führerstand und eine dem Führerstand zugeordnete Plattform. Unterhalb der Plattform ist eine Brennkraftmaschine, insbesondere Benzin oder Diesel, oder ein Elektromotor angeordnet. Unterhalb des Führerstandes liegt außerdem ein mehrstufig schaltbarer Drehmomentwandler, nämlich ein stufenloses hydrostatisches Getriebe oder hydraulischer/elektrischer Radantrieb, dessen größter Geschwindigkeitsbereich vornehmlich der Vorwärtsfahrt dient. Unterhalb des Führerstandes sind eine Treibachse oder einzelne Treibräder angeordnet, die lenkbar sein kann/können. Die Antriebseinheit kann ebenfalls lenkbar sein. An der Frontseite und der Heckseite sind jeweils Zapfwellen 2, 3 angeordnet, die zum Antrieb der dort angebrachten Arbeitsgeräte dienen.

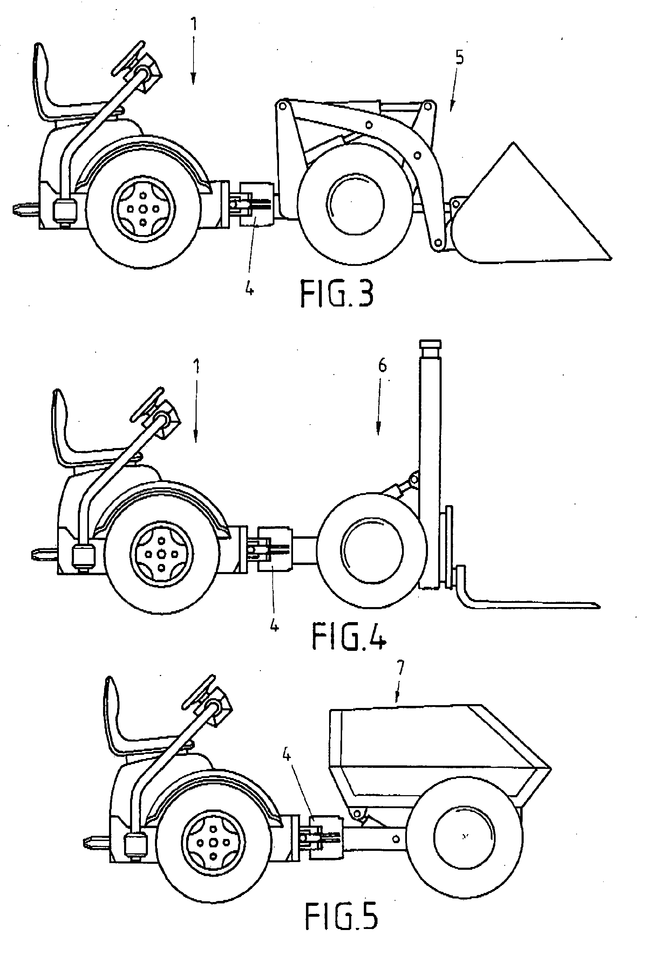

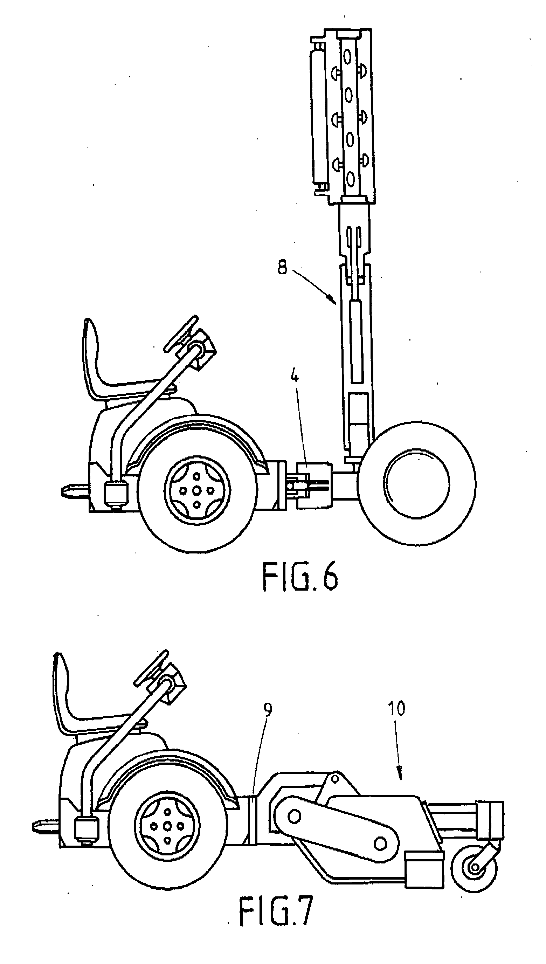

Bei den Arbeitsmaschinen entsprechend den Figuren 3 bis 8 ist an der Frontseite jeweils ein Arbeitsgerät angebracht, nämlich über ein Knickgelenk 4 ein Frontlader 5 (Figur 3), ein Frontstapler 6 (Figur 4), ein Dumper 7 (Figur 5) und ein Ausleger-Mähgerät 8 (Figur 6). Über die Zapfwelle 2 werden diese Arbeitsgeräte von der Antriebseinheit angetrieben. Je nach Ausführung des Arbeitsgerätes sind bei diesen Beispielen auch alle anderen Lenkungsarten möglich.

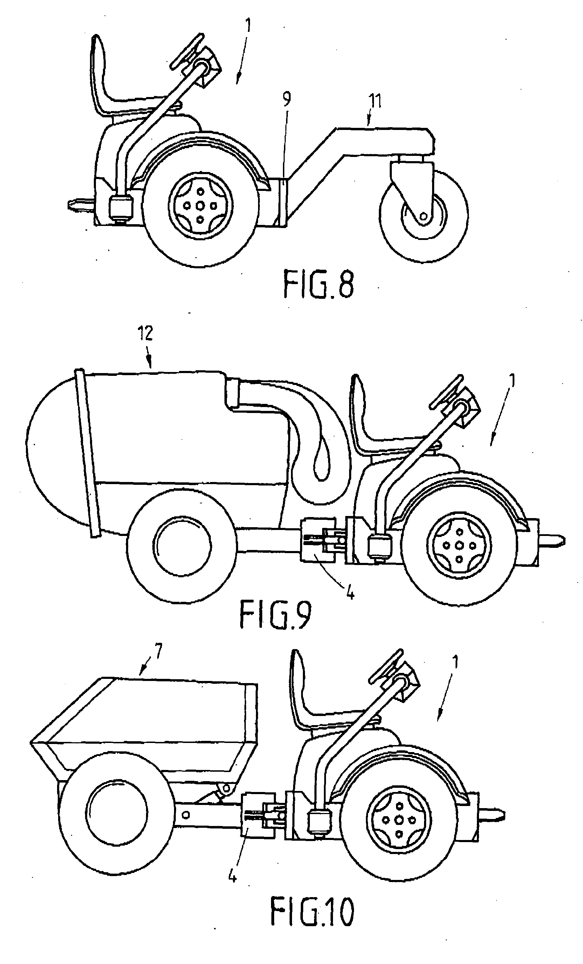

Für andere an der Frontseite anzubauende Arbeitsgeräte ist es zweckmäßig, keine Knicklenkung 4, sondern eine Achsschenkellenkung vorzusehen. Das Arbeitsgerät ist in diesem Fall über eine an sich bekannte Schnellwechselplatte 9 mit der Antriebseinheit 1 verbunden, wie es in den Figuren 7 und 8 gezeigt ist. In Figur 7 ist als Arbeitsgerät ein Schlägelmäher 10 und in Figur 8 ein Holm 11 über eine Schnellwechselplatte 9 mit der Antriebseinheit 1 verbunden. Bei der Arbeitsmaschine nach Figur 7 hat man eine Achsschenkellenkung und bei der Arbeitsmaschine nach Figur 8 eine Drei-Rad-Lenkung. Auch bei diesen Beispielen wären alle anderen Lenkungsarten möglich.

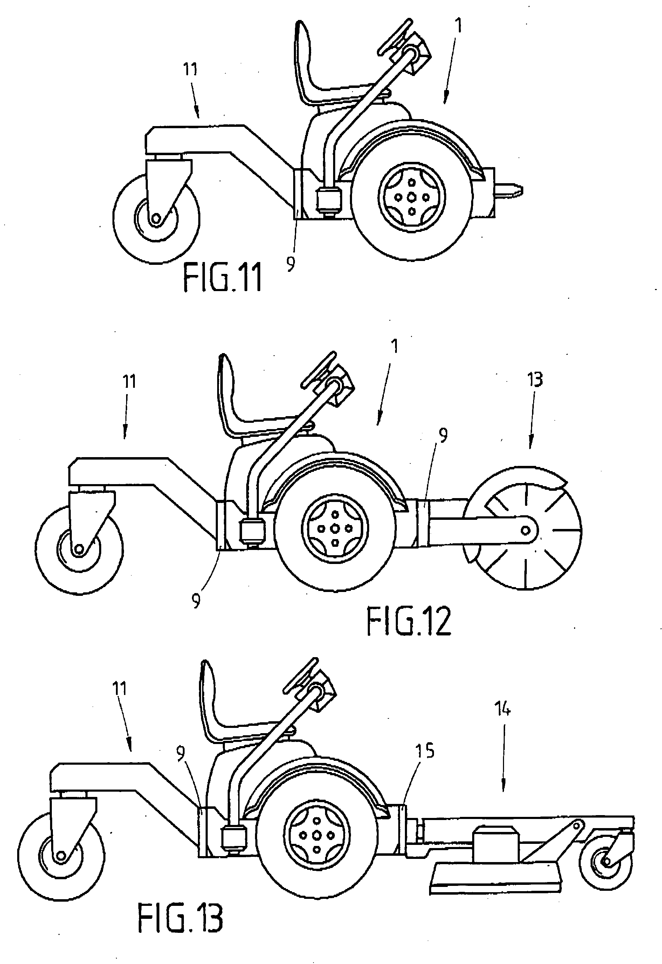

Arbeitsgeräte können aber auch heckseitig über unterschiedliche Lenkmittel mit der Antriebseinheit 1 verbunden sein. So ist zum Beispiel in Figur 9 ein Sauger 12, in Figur 10 ein Dumper 7 jeweils über ein Knickgelenk 4 mit der Antriebseinheit 1 verbunden. In ähnlicher Weise wie in Figur 8 ist ein Holm 11 in Figur 11 über eine Schnellwechselplatte 9 mit der Antriebseinheit 1 verbunden, um eine Drei-Rad-Lenkung zu bilden.

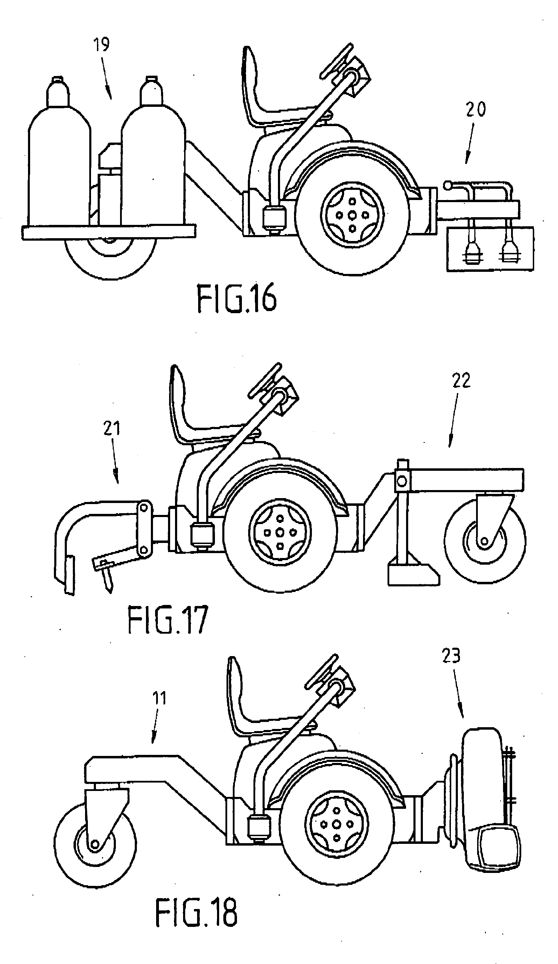

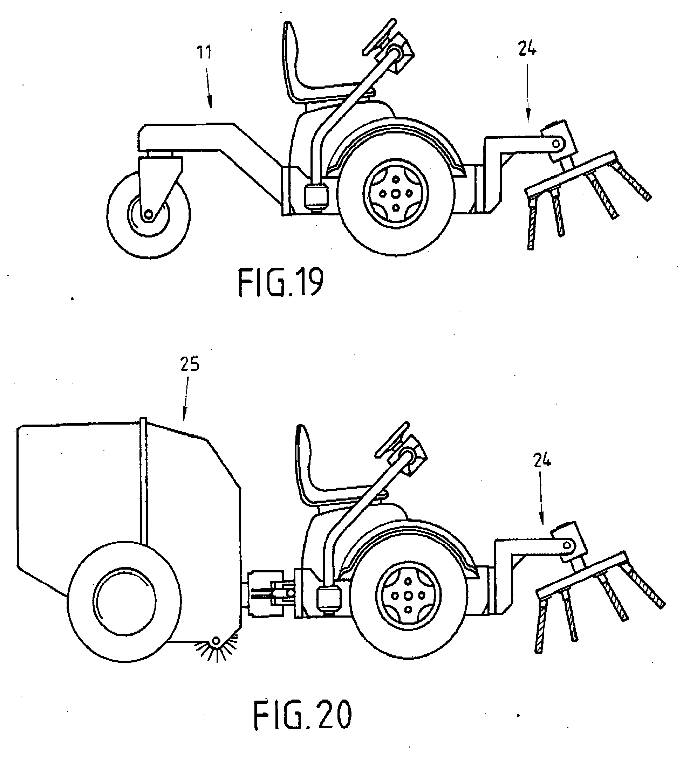

In einer weiteren Alternative können auch sowohl heckseitig als auch frontseitig Arbeitsgeräte angebracht sein, wie es in den Figuren 12 bis 20 dargestellt ist. In Figur 12 ist ein Holm 11 und eine Frontkehrmaschine 13, in Figur 13 neben dem Holm 11 ein Frontsichelmäher 14, verbunden über eine Heck-Dreiradlenkung mit der Antriebseinheit 1 verbunden.

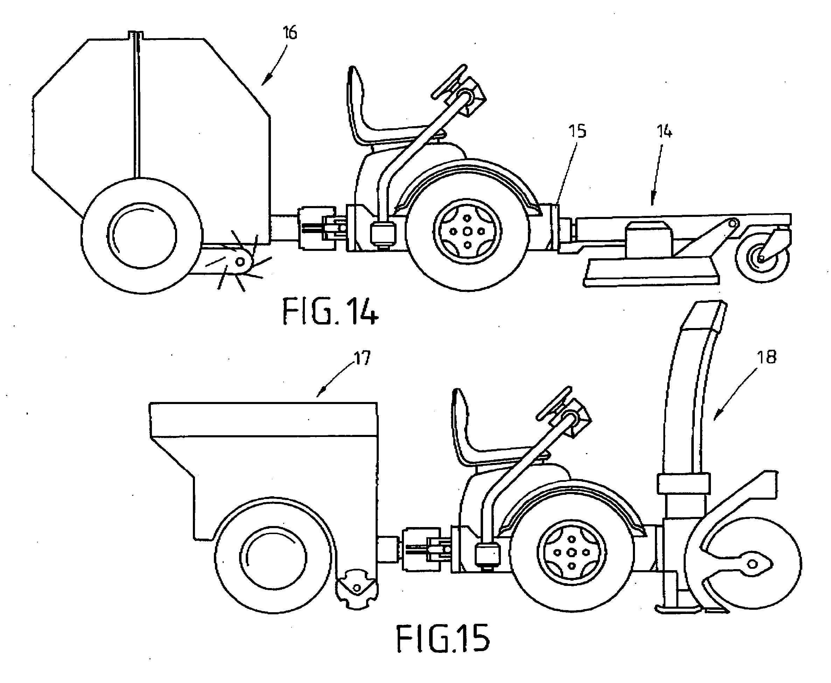

In den Gerätekombinationen entsprechend den Figuren 14 bis 20 sind als Arbeitsgeräte mit der Antriebseinheit 1 verbünden:
- 16: Rasenkehrmaschine
- 17: Salzstreuer
- 18: Schneefräse
- 24: Wildkrautbürste
- 25: Schmutzkehrmaschine

Die Art des jeweils eingesetzten Gelenkes bzw. Lenkmittels geht aus den Figuren hervor.

Im Folgenden werden noch einige Erläuterungen zu Einzelheiten der Erfindung gegeben.

Erfindungsgemäß werden die Arbeitsgeräte über eine Schnellwechselplatte an den Triebkopf angekuppelt, wobei je nach Zweckmäßigkeit zwischen der Schnellwechselplatte und dem Arbeitsgerät ein Drehgelenk oder ein anderes Gelenk, welches optimal für dieses Arbeitsgerät ist, angeordnet sein kann. Wesentlich ist die freie Wählbarkeit des optimalen, zum Arbeitsgerät passenden Lenkmittels, insbesondere in Kombination mit der an sich bekannten Schnellwechselplatte.

Bei der erfindungsgemäßen Arbeitsmaschine handelt es sich um eine selbstfahrende Arbeitsmaschine, wobei die angekuppelten Arbeitsgeräte selber biegesteif sind und außerdem nach dem Ankuppeln an den Triebkopf mit diesem eine biegesteife Längsachse bezüglich der horizontalen Ebene bilden. Der Triebkopf kann, muss aber nicht, lenkbar sein und einen Rad- oder Kettenantrieb oder einen anderen Antrieb aufweisen. Auch das Arbeitsgerät kann eine eigene Lenkung haben, welche mit dem Triebkopf verbunden und von dort aus zu betätigen ist.

Das erfindungsgemäße Wechselsystem ist für sehr viel mehr Einsatzzwecke als die bekannten großen Triebköpfe geeignet, welche nur für landwirtschaftliche, Straßenbauzwecke und ähnliche Großprojekte einsetzbar sind. So kann das Wechselsystem entsprechend der Erfindung auch im privaten Bereich eine vielfältige Anwendung finden, insbesondere wenn der Triebkopf in einer besonders bevorzugten Ausgestaltung eine so geringe Breite hat, dass er durch jede Normtür, auch durch kleine Tore, Gartentore und Gartentüren hindurchpasst. Möglich ist eine Breite des Triebkopfes von 100 cm oder sogar von nur 80 cm.

Dennoch kann der Triebkopf eine relativ hohe Leistung, nämlich bis zu 47,6 PS (35 kW) haben und damit eine erheblich höhere Leistung als die bekannten so genannten Kleinschlepper haben, die allerdings nicht so schmal sind, dass diese durch Normtüren, Gartentore usw. hindurchpassen.

Im Folgenden werden Beispiele für die Kombination von Arbeitsgeräten an der Frontseite oder Heckseite oder an beiden Seiten des Triebkopfes mit Angabe der optimalen Lenkungsart aufgeführt:

### Beispiele für Arbeitsgeräte Front

Schlegelmäher A
Sichelmäher A
Scheibenmähwerk A
Dumper K
Frontlader K
Frontstapler K
Seilwinde K
Holm R

### Beispiel für Arbeitsgeräte Heck

Dumper K
Ladefläche K
Kehrmaschine K
Rasenkehrmaschine K
Salzstreuer K
Sauger K
Holm R
Heckenschneider K

### Beispiele für Gerätekombinationen

Sichelmäher/Rasenkehrmaschine K
Kehrbürste/Kehrmaschine K
Wildkrautbürste/Kehrmaschine K
Holm Heck/Blasgerät R
Holm Front mit Planierschild/Rechen R
Schneefräse oder Schneeschild/Salzstreuer K

### Lenkungsarten:

K = Knicklenkung, wahlweise in Front oder Heck
A = Achsschenkellenkung, wahlweise in Front oder Heck
R = 3-Rad-Lenkung, wahlweise in Front oder Heck

### Bezugszeichenliste

- 1: Antriebseinheit (Triebkopf)
- 2: frontseitige Zapfwelle
- 3: heckseitige Zapfwelle
- 4: Knickgelenk
- 5: Frontlader
- 6: Frontstapler
- 7: Dumper
- 8: Ausleger-Mähgerät
- 9: Schnellwechselplatte
- 10: Schlegelmäher
- 11: Holm
- 12: Sauger
- 13: Frontkehrmaschine
- 14: Frontsichelmäher
- 15: Schnellwechselplatte
- 16: Rasenkehrmaschine
- 17: Salzstreuer
- 18: Schneefräse
- 19: Transportvorrichtung
- 20: Gerät für thermische Unkrautbekämpfung
- 21: Egalisiergerät
- 22: Planierschild
- 23: Laubblasgerät
- 24: Wildkrautbürste
- 25: Schmutzkehrmaschine

## Patentansprüche

1. Wechselsystem für ein Fahrzeug, insbesondere ein Landwirtschafts-, Bau- und/oder kommunal oder im Privatbereich nutzbares Fahrzeug, umfassend
- eine fahrbare Antriebseinheit (1), vorzugsweise mit Führerstand und Fahrersitz, insbesondere mit nur einer Fahrwerksachse oder ausgeführt als Einzelradantrieb mit 2 Rädern (hydraulisch, mechanisch oder elektrisch), und umfassend
- unterschiedliche wechselbare Arbeitsgeräte, die an die Antriebseinheit ankuppelbar sind, wobei die Antriebseinheit und das/die Arbeitsgerät(e) nach dem Ankuppeln eine selbstfahrende Arbeitsmaschine bilden,
**dadurch gekennzeichnet,**
**dass** das/die Arbeitsgerät(e) (5, 6, 7, u. a.) über ein frei wählbares Lenkmittel (4) mit der Antriebseinheit (1) verbindbar sind.

2. Wechselsystem nach Anspruch 1,
**dadurch gekennzeichnet,**
**dass** die Arbeitsgeräte bezogen auf die vertikale Richtung biegesteif mit der Antriebseinheit (1) verbindbar sind.

3. Wechselsystem nach Anspruch 1 oder 2,
**dadurch gekennzeichnet,**
**dass** das Arbeitsgerät ein oder mehrere Räder, Raupeneinheiten oder ein anderes Fahrwerk aufweist.

4. Wechselsystem nach einem der vorhergehenden Ansprüche,
**dadurch gekennzeichnet,**
**dass** eine Schnellwechselplatte (9) zum Ankuppeln vorgesehen ist.

5. Wechselsystem nach einem der vorhergehenden Ansprüche,
**dadurch gekennzeichnet,**
**dass** das ankuppelbare Arbeitsgerät einen biegesteifen Rahmen aufweist.

6. Wechselsystem nach einem der vorhergehenden Ansprüche,
**dadurch gekennzeichnet,**
**dass** die Antriebseinheit (1) (Triebkopf) selber lenkbar ist.

7. Wechselsystem nach einem der vorhergehenden Ansprüche,
**dadurch gekennzeichnet,**
**dass** das Arbeitsgerät selber lenkbar ist.

8. Wechselsystem nach einem der vorhergehenden Ansprüche,
**dadurch gekennzeichnet,**
**dass** die Antriebseinheit (1) eine Breite von weniger als 100 cm, insbesondere weniger als 80 cm hat.

9. Wechselsystem nach Anspruch 8,
**dadurch gekennzeichnet,**
**dass** die Antriebseinheit (1) einen Motor mit einer Leistung von 8 kW (11 PS) bis 35 kW (47,6 PS) aufweist.

10. Wechselsystem nach einem der vorhergehenden Ansprüche,
**dadurch gekennzeichnet,**
**dass** die Arbeitsgeräte an der Frontseite und/oder am Heck der Antriebseinheit ankuppelbar sind und insbesondere über eine Zapfwelle (2, 3) angetrieben werden können.

11. Wechselsystem nach einem der vorhergehenden Ansprüche,
**dadurch gekennzeichnet,**
**dass** als Lenkmittel eine Knicklenkung (4)
und/oder eine Achsschenkellenkung
und/oder eine 3-Rad-Lenkung
und/oder eine Panzerlenkung
und/oder eine Hundeganglenkung
und/oder eine Kombinationslenkung
vorgesehen ist.
